(19) Europäisches Patentamt / European Patent Office / Office européen des brevets

(11) **EP 2 642 312 B1**

(12) **EUROPEAN PATENT SPECIFICATION**

(45) Date of publication and mention of the grant of the patent:
**25.10.2017 Bulletin 2017/43**

(51) Int Cl.:
**G01S 5/06** *(2006.01)*    **G01S 5/02** *(2010.01)*

(21) Application number: **13160415.9**

(22) Date of filing: **21.03.2013**

(54) **Hardware-reduced system for TDOA-locating of radio frequency emitters**

Hardwarereduziertes System zur TDOA-Lokalisierung von Funkfrequenzemittern

Système à matériel réduit pour localisation TDOA d'émetteurs de fréquence radio

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2012 EP 12160631**

(43) Date of publication of application:
**25.09.2013 Bulletin 2013/39**

(73) Proprietor: **Saab Medav Technologies GmbH**
**91080 Uttenreuth (DE)**

(72) Inventors:
• **Kolb, Dirk**
  **91080 Uttenreuth (DE)**
• **Warzügel, Steffen**
  **91080 Uttenreuth (DE)**
• **Schramm, Johannes**
  **91080 Uttenreuth (DE)**

(74) Representative: **Benedum, Ulrich Max et al**
**Nebens IP**
**Patente Marken Designs**
**Oberföhringer Strasse 172**
**81925 München (DE)**

(56) References cited:
WO-A2-01/23904     US-A- 2 972 742
US-A- 3 848 254     US-A- 5 327 144
US-A- 5 512 908     US-A1- 2007 120 738
US-A1- 2007 236 389     US-A1- 2008 089 393

**Description**

TECHNICAL FIELD

The present application relates to methods of determining the location of radio frequency emitters by TDOA methods and equipment.

TECHNICAL BACKGROUND

In recent years TDOA-locating (TDOA = Time Difference Of Arrival) of cooperating and non-cooperating radio frequency emitters has become a well-established method for determining the location of known or unknown emitters of RF-signals. The development for locating the emitters of RF transmissions is also met by an increasing demand. Civil and military authorities wish to find the unknown locations of emitters of radio frequency, for example "radio hams" communicating in forbidden frequency bands or with a transmission power exceeding given thresholds, criminals that communicate with cellular phones or radiotelephones, emergency calls of persons using a cellular phone or transmitters belonging to spies or hostile forces.

The various methods for locating emitters of radio frequencies, for example Angle-Of-Arrival (AOA), Time-Of-Arrival (TOA) and Time-Difference-Of-Arrival (TDOA), all have benefits and drawbacks. For locating unknown and non-cooperating emitters, TOA cannot be used, because there is a need for an extremely precise synchronisation between clocks in the emitters and receivers. AOA uses the direction of arrival of the received signals. For locating at least two receiving stations with multiple antennas are needed. Based on the direction of arrival of the received signals and the known positions of the receivers, the unknown position of the emitter is calculated by triangulation. TDOA needs at least three receiving stations with known positions and synchronised clocks in the receivers. Based on the time differences of a single signal that is transmitted by the emitter and received at different times at the corresponding receivers the unknown position of the RF emitter can be computed.

Regarding TDOA and AOA, the ITU-R Report SM.2211 (06/2011), *"Comparison of Time-Difference-of-Arrival and Angle-of Arrival Methods of Signal Geolocations"* summarizes the state of the art and sets forth corresponding advantages and shortcomings. In short, the main TDOA-versus-AOA strengths are simpler antenna requirements, simpler situation and calibration requirements and good performance for wideband, low-SNR signals and short duration signals. US 5,512,908 A (Herrick) and US 5,327,144 (Stilp et al.) disclose methods for determining the TDOA signals from cellular phones (GSM). US 2008/0167051 (Cheok et al.) relates to a TDOA method for signals with an "ultra-wide band frequency". US 2008/0089393 (Opperman) discloses a method for radio signal positioning when the frequency of the signal is known. It is an object of all these methods and systems to improve the precision of measurements in the area of travelling time differences of signals. The Global Positioning System (GPS) provides the necessary location and time information. GPS time keeping and differential GPS (DGPS) for the mobile receivers are therefore used to improve the accuracy of conventional TDOA systems.

It is an object of the invention to provide a TDOA locating system with reduced hardware requirements.

US 2007/0236389 A1 discloses a method for estimating bias errors in a TDOA system using a reference beacon signal in which position information relating to the reference beacon transmitter is encoded. The reference signal is received by one or more receivers operating in conjunction with a reference correction processing system. The reference correction processing system receives, via the receivers, the position information. The processing system operates in accordance with conventional TDOA techniques to estimate the location of various emitters, including emitters of unknown location as well as reference emitters of known location. Reference correction is calculated from information contained in the signals received by the receivers from the reference emitter to estimate TDOA bias errors, which can be used to improve the processing system's estimate of location of the emitters of unknown location. The reference correction is determined by computing the "true" TDOA measurements that would be expected based on the known transmitter and receiver positions and comparing to the "measured" TDOA values.

US 2008/089393 A1 discloses a method for positioning a mobile signal transmitter. The distance between the transmitter and multiple sensors is determined based on a direct sequence spread spectrum signal. A transmitter delay of the signal is estimated each sensor cross-correlating an over-sampled representation of the signal with an appropriate local spreading sequence, which contains poly-phased symbol values which are different from the symbols used in the direct sequence to spread the transmitted signal.

SUMMARY OF THE INVENTION

This object is achieved by a method for obtaining the unknown three-dimensional location of at least one radio frequency, target emitter by time difference of arrival measurements, the method comprising the steps of providing at least one reference emitter having a known or pre-determined exact location and known occupied frequencies; measuring with a plurality of sensor devices distributed around a target area the location of the at least one reference emitter with common TDOA techniques without precisely synchronizing the sensor devices; comparing the measured location of the at least one reference emitter with the known exact location of the at least one reference emitter to obtain a comparison result; calculating from the comparison result the location offsets in the measurement values caused by a synchronization error because of not precisely synchronizing the sensor devices; without any intermittent shutting down or switching off of the sensor devices, measuring the location of the at least one unknown target emitter by applying TDOA techniques; and correcting the location in the measurement results of the at least one unknown target emitter caused by not precisely synchronizing the sensor devices using the known location offsets calculated for the at least one reference emitter. The signal of the at least one target emitter received at each sensor device is sampled with a sampling frequency that is suitable according to the sampling theorem and the autocorrelation function of the received signal is computed from the sampled signal, the autocorrelation function therefore being a discrete autocorrelation function. The locating precision of the method is improved by the steps of: interpolating the values in each time segment of the autocorrelation function with a number of interpolation values suitable for subsequent smooth curve fitting; fitting a continuous smooth curve to the neighbourhood of the maximum value of the interpolated autocorrelation function in each time segment, the continuous smooth curve spanning the distances between the discrete values of the interpolated autocorrelation function; and calculating the maximum of the continuous smooth curve and taking this maximum as the maximum value of the autocorrelation function in this time segment, which is taken as the location offset. This method provides the advantage of a reduced hardware requirement, because the sensor devices only need to operate in a roughly synchronized mode. Therefore, the sensor devices can be constructed so that they are much smaller and more light-weight whilst having a lowered power consumption.

In a preferred embodiment of the disclosed method, a line of sight connection between the sensor devices and the at least one reference emitter and between the sensor devices and the unknown target emitters is established by mounting the small lightweight sensor devices on a flying platform. The flying platform may be a rotorcraft or a drone, preferably a quadrotor, also called a quadrotor helicopter or quadcopter.

Another aspect of the disclosure concerns an equipment for obtaining the unknown three-dimensional location of at least one radio frequency, target emitter by time difference of arrival measurements, the equipment comprising choosing means configured to select at least one reference emitter having a predetermined or known exact location and known occupied frequencies; sensor devices for measuring the location of the at least one reference emitter and the location of the at least one unknown target emitter with common TDOA techniques without being precisely synchronized by an exact timing reference; comparing means that are configured to compare the measured location of the at least one reference emitter with the predetermined exact location of the at least one reference emitter; location offset computing means that are configured to calculate the location offsets in the measurement results for the at least one reference emitter caused by not precisely synchronizing the sensor devices; and correcting means that are configured to correct the location offsets in the measurement results of the at least one unknown target emitter caused by not precisely synchronizing the sensor devices using the known location offsets calculated for the at least one reference emitter. The signal of the at least one target emitter received at each sensor device is sampled with a sampling frequency that is suitable according to the sampling theorem and the autocorrelation function of the received signal is computed from the sampled signal, the autocorrelation function therefore being a discrete autocorrelation function, and wherein the locating precision is improved by the location offset computing means being configured to perform the steps of: interpolating the values in each time segment of the autocorrelation function with a number of interpolation values suitable for subsequent smooth curve fitting; fitting a continuous smooth curve to the neighborhood of the maximum value of the interpolated autocorrelation function in each time segment, the continuous smooth curve spanning the distances between the discrete values of the interpolated autocorrelation function; and calculating the maximum of the continuous smooth curve and taking this maximum as the maximum value of the autocorrelation function in this time segment, which is taken as the location offset.

A preferred embodiment of the present disclosure relates to an equipment, wherein the sensor devices that operate in an only roughly synchronized mode are small, light-weight and have a low power consumption such that they can be placed on a flying platform to establish a line of sight connection between the sensor devices and the at least one reference emitter and between the sensor devices and the at least one unknown target emitter.

The present invention is best understood when read in conjunction with the accompanying drawing and the example which serve to illustrate the disclosure. It should be understood, however, that the invention is not limited to the specific embodiment described in the example.

BRIEF DESCRIPTION OF THE DRAWING

In the accompanying drawing

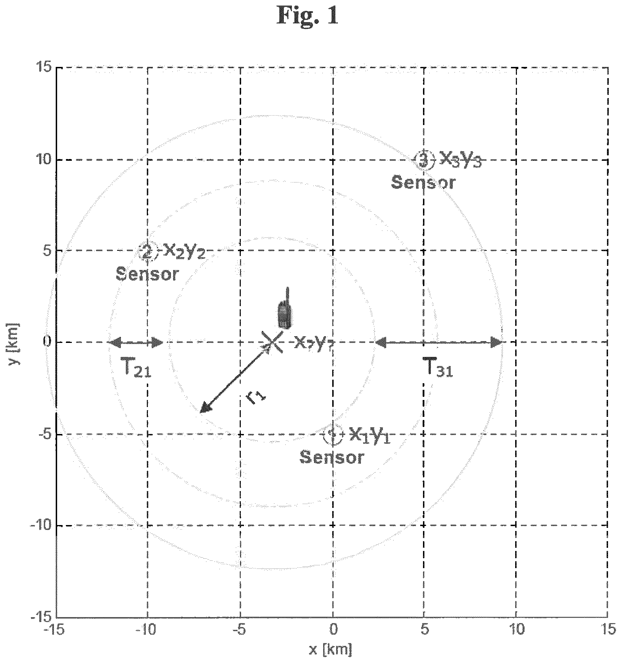

Fig. 1    shows a schematic drawing of a common TDOA location finding scenario in two-dimensional space.

DETAILED DESCRIPTION OF THE INVENTION

The present disclosure concerns a system for TDOA-locating with small, light-weight and inexpensive sensor devices having a low power consumption. When the location of an unknown emitter is measured using prior art TDOA methods and equipment, precise time synchronization of the receivers is needed. Such a precise time synchronization can, so far, only be achieved using large and heavy sensor devices. These consume a lot of power, and are very expensive. The present applicant has developed a method and equipment that allows TDOA-locating with receivers that are only roughly synchronized, which can therefore be downsized to inexpensive devices. The synchronization and delay errors between the sensor devices which would normally impair the locating results are corrected as detailed below.

Firstly, a reference emitter is selected or provided. The reference emitter's exact location and the frequencies it transmits on have been determined in advance or are known. Then, the location of the reference emitter is measured using TDOA techniques but using the downsized, inexpensive sensor devices. Such sensor devices are not precisely synchronized by an exact timing reference. The measured location of the reference emitter and the predetermined exact location of the reference emitter are then compared to obtain the deviations between the measured and the true location of the reference emitter. The delay errors occurring in the measured results for the reference emitter are then computed using the obtained deviations.

Secondly, the unknown locations of the target emitters are measured in the same measurement session. "The same measurement session" means that the sensor devices are started to measure the position of the reference emitter, and are kept running to measure the locations of unknown target emitters without any intermittent shutting down or switching off. Provided this condition is satisfied, the delay errors as determined for the reference emitter and the delay errors for the unknown target emitters are the same. This means that the delay errors occurring for the target emitters can be compensated using the delay errors computed for the reference emitter because it was found that in a single continuous measurement session the delay errors must be constant values.

A line of sight connection between the sensor devices and the reference emitter and between the sensor devices and the unknown target emitters may be established by mounting the sensor devices on flying platforms such as rotorcrafts or a drone. The rotorcraft may be a quadrotor helicopter or multicopter.

Fig. 1 shows a schematic drawing of a common TDOA location finding scenario with a target and several sensors, as well as the principles of a TDOA locating system. In three-dimensional space, there is a target (emitter of an RF-wave) with unknown coordinate values $(x, y, z)$ and four sensor devices (receivers of the RF-wave transmitted from the emitter) 1 - 4 with known coordinate values $(z_1, y_1, z_1)$, $(x_2, y_2, z_2)$, $(x_3, y_3, z_3)$ and $(x_4, y_4, z_4)$. For ease of understanding, only a two-dimensional scenario with three sensors is shown in Figure 1. Measuring the travelling time difference $T_{21}$ of the electromagnetic wave between sensor 2 and sensor 1, the travelling time difference $T_{31}$ of the electromagnetic wave between sensor 3 and sensor 1 and the travelling time difference $T_{41}$ of the electromagnetic wave between sensor 4 and sensor 1, and converting these measured values using the speed of light to corresponding distances in space $m_{21}$, $m_{31}$ and $m_{41}$, respectively, the distances between the respective circles are known (more precisely, $m_{21}$, $m_{31}$ and $m_{41}$, are the radial distances between the respective circles of the sensor devices 2 to 4 and the sensor device 1). Together with the unknown radius $r_1$, the following equations for the three-dimensional space are obtained:

$$(x - x_1)^2 + (y - y_1)^2 + (z - z_1)^2 = r_1^2$$
$$(x - x_2)^2 + (y - y_2)^2 + (z - z_2)^2 = (r_1 + m_{21})^2$$
$$(x - x_3)^2 + (y - y_3)^2 + (z - z_3)^2 = (r_1 + m_{31})^2$$
$$(x - x_4)^2 + (y - y_4)^2 + (z - z_4)^2 = (r_1 + m_{41})^2$$

$$\text{(equation system 1)}$$

In the above equation system 1 there are four unknown variables $x$, $y$, $z$ (position of the target) and $r_1$ (distance between the sensor device 1 and the target) in four equations. Solving the above equation system, the unknown variables $x$, $y$, $z$ and $r_1$ are obtained and the position of the target in three-dimensional space is known.

According to conventional TDOA-methods, the travelling time differences are calculated by computing a cross-correlation between extracted signal segments of sensor device 1 and the other sensor devices 2 to 4 or by computing the autocorrelation function of the extracted signal segments at each sensor device. To this end, the sensor devices in prior art locating systems must be synchronized with an extremely precise timing reference, because synchronisation errors between the sensor devices directly influence the precision of the cross-correlation or autocorrelation results, and accordingly the precision of the locating results. The required precision of the synchronisation may be in the range of some ten nanoseconds. According to the prior art, the synchronisation is performed using a timing reference derived from GPS-signals.

When timing synchronisation of this kind is used, there are considerable drawbacks. Firstly, the GPS-signals may be jammed in certain regions. Secondly, receivers synchronized using GPS-derived timing references are complex, expensive and consume a lot of power. Moreover, they are bulky and very heavy. The platforms on which the receivers are mounted must therefore provide a stable power supply with a high power output. This means that the smallest platforms for such conventional receivers are driven vehicles, such as vans or cars. The prior art therefore represents a technical problem since small, light-weight and cheap sensor devices are preferred for locating purposes, preferably sensor devices which can be hidden or easily transported and used in an urban environment.

To achieve the desired reduction of weight, volume, power consumption and cost compared to prior art TDOA equipment, the inventors examined the prior art method in order to find a simpler solution for those parts of the conventional equipment that contribute to weight, volume, power consumption and costs. They further found that there is no need for precise a GPS-synchronization of the sensor devices, which greatly reduces the hardware cost. The invention therefore concerns a TDOA method which no longer requires a precise synchronization of the sensor devices based on a very exact timing reference and very precisely startable receivers, but instead using a rough synchronization, so that the hardware requirements for the sensor devices can be reduced by several orders of magnitude which also applies to weight, volume, power consumption and costs.

This object is achieved by a TDOA method which employs one or more reference emitters whose frequencies of operation and exact locations are known, or can be readily determined. A suitable reference emitter may be, for example, a radio station or a TV station that transmits at a high power, and has a tall mast to cover a large area. In order be useful as a reference emitter, the exact location and the frequencies of operation of such a reference emitter must be determined in advance or must be known, but this represents no problem.

In a second step the sensor devices (radio receivers of the locating system) are distributed around the target area, and they are tuned to the centre frequency of the reference emitter.

In a third step the location of the reference emitter is measured using the TDOA techniques described above according to equation system 1, *but without precisely synchronizing the sensor devices* to an exact timing reference. The receivers in the sensor devices are only roughly synchronized, and then started. It is important to note that the receivers must not be switched off after they have been started, but rather they must all be kept running for the duration of the entire measurement and determination procedure of the unknown target emitters. Because of the missing exact starting time synchronization of the receivers, there are delay errors in the measurement results. These cause location offsets in the computed positions of the emitters under investigation. It is further important to note that the delay errors due to the synchronization errors of the receivers are constant values provided the receivers are kept running during the entire measurement procedure and not switched off. Thus, there is only a need to compensate these delay errors, and this can be done by measuring the pre-determined or known exact location(s) of the one or more reference emitters.

If the location offsets caused by the delay errors are denoted by $\Delta$, equation system 1 may be rewritten in the following way for measuring the position of the reference emitter.

$$(x_R - x_1)^2 + (y_R - y_1)^2 + (z_R - z_1)^2 = (r_1 + \Delta_R)^2$$
$$(x_R - x_2)^2 + (y_R - y_2)^2 + (z_R - z_2)^2 = (r_1 + \Delta_R + m_{21} + \Delta_{21})^2$$
$$(x_R - x_3)^2 + (y_R - y_3)^2 + (z_R - z_3)^2 = (r_1 + \Delta_R + m_{31} + \Delta_{31})^2$$
$$(x_R - x_4)^2 + (y_R - y_4)^2 + (z_R - z_4)^2 = (r_1 + \Delta_R + m_{41} + \Delta_{41})^2$$

(equation system 2)

In the above equation system 2 the location $(x_R, y_R, z_R)$ of the reference emitter and the locations of the sensor devices $(z_{1-4}, y_{1-4}, z_{1-4})$ are known. Now the measured location of the reference emitter is compared with the already known exact location of the reference emitter, and the location offsets $\Delta_{21}$, $\Delta_{31}$ and $\Delta_{41}$ may be computed using equation system 2. These offsets can be used to compensate the roughly synchronized operation mode of all sensor devices in the further processing steps. $\Delta_R$ will be irrelevant for the further processing, because the radius $r_1$ itself is an unknown variable that has to be calculated. Therefore, $r_1 + \Delta_R$ is just a single unknown variable.

Having obtained the location offsets or delay errors, in a fourth step of the method of the invention, the sensor devices are tuned to the centre frequencies of unknown target emitters. The location of an unknown target emitter is computed by applying known TDOA techniques according to equation system 1, whereby the sensor devices are still running under the starting conditions, that is only roughly synchronized and with constant delay errors now known from the measurement of the reference emitter(s). The location offsets resulting from the only roughly synchronous operation mode are corrected with the offsets known from the reference emitter in the following way, see equation system 3.

$$(x - x_1)^2 + (y - y_1)^2 + (z - z_1)^2 = r_1{}^2$$
$$(x - x_2)^2 + (y - y_2)^2 + (z - z_2)^2 = (r_1 + m_{21} + \Delta_{21})^2$$
$$(x - x_3)^2 + (y - y_3)^2 + (z - z_3)^2 = (r_1 + m_{31} + \Delta_{31})^2$$
$$(x - x_4)^2 + (y - y_4)^2 + (z - z_4)^2 = (r_1 + m_{41} + \Delta_{41})^2$$

(equation system 3)

By solving equation system 3, the unknown location of the target emitter can be found without using precisely synchronized sensor devices. If two or more reference emitters are used, the precision of the location offsets may be improved.

For the algorithm described above, there are some requirements that have to be fulfilled. The segment length used for correlation is also the maximum allowable delay between sensor devices. If for example a segment length of 1 second is used, a maximum delay of 1 second can be compensated for. As stated above, a rough synchronization, e.g. by using Network Time Protocol (NTP) servers for time-stamping is needed anyway. A line-of-sight (LOS) connection of the sensor devices to the target area is further needed. Also, a LOS connection to the reference emitter(s) is required.

The above requirements may be fulfilled as follows. Because there is no need for precise synchronization, the radio receivers used in the sensor devices can be small, light-weight and have a low power consumption. Because of this, the radio receivers may be mounted to inexpensive flying platforms which are now available, such as "rotorcraft", without any problems caused by the weight, size and power consumption of the sensors. Platforms flying with 300 metres over ground grant a LOS connection to both the target area and the reference emitter(s).

The above disclosure is preferably included in a method for determining the location of an emitter of a bandlimited signal of 30 kHz or less. The method may comprise the steps of a sampling of signals arriving two or more receivers; correlating segments of the sampled signals of each receiver to obtain the cross-correlation functions of each signals; and extracting the maximum values of the cross-correlation functions that represent the travelling time differences of the corresponding signals. For improving the accuracy of the TDOA method the step of sampling the signals arriving at the at least two receivers preferably comprises a first step of sampling the signals according to the sampling theorem, and a second step of interpolating the sampled values of the first step by a suitable number of interpolation values.

The step of correlating segments of the sampled signals of each two receivers then includes correlating segments of the signals interpolated by the suitable number of interpolation values. The step of extracting the maximum values of the cross-correlation functions may preferably comprise a first step of fitting continuous smooth curves to the maximum values and two or more neighbouring values of the cross-correlation functions, the continuous smooth curves spanning the distances between these values, and a second step of calculating the maximums of the continuous smooth curves and taking these maximums as the maximum values of the cross-correlation functions. The interpolation of the time dependent signals received at the receivers is preferably done using a Farrow filter. The continuous smooth curve may be a parabolic curve.

This method may also be applied to a TDOA method for locating a moving emitter of a band-limited signal of 30 kHz or less wherein the signal is possibly disturbed by multipath transmissions and reflections from stationary or moving reflectors. The method may preferably comprise the steps of sampling the signals arriving at the at least two receivers; correlating segments of the sampled signals of each two receivers to obtain the cross-correlation functions of each two signals; removing the effects of movements and disturbed channels from the cross-correlation functions; and extracting the maximum values of the cross-correlation functions that represent the travelling time differences of the corresponding signals; wherein the step of sampling the signals arriving at the at least two receivers comprises a first step of sampling the signals according to the sampling theorem, and a second step of interpolating the sampled values of the first step by a suitable number of interpolation values. For improving the accuracy of that method the step of correlating segments of the sampled signals of each two receivers may preferably comprise a first step of dividing the sampled and interpolated segments of signals of each two receivers into the same number of smaller pieces of equal size, a second step of correlating corresponding small pieces to obtain cross-correlation functions of each two corresponding signal pieces, a third step of ordering the cross-correlation functions of the corresponding pieces in a sequence one behind the other in a two-dimensional plane, and a fourth step of computing a one-dimensional FFT in the ordering direction of the cross-correlation functions for every value of the cross-correlation functions in the two-dimensional plane. The step of removing the effects of movements and disturbed channels from the cross-correlation functions may comprise a step of selecting the peak line with the strongest magnitude from the FFT in the two-dimensional plane and using this peak line as a cross-correlation function for further processing. And the step of extracting the maximum values of the cross-correlation functions may comprise a first step of fitting continuous smooth curves to the maximum values and two or more neighbouring values of the cross-correlation functions, the continuous smooth curves spanning the distances between these values, and a second step of calculating the maximums of the continuous smooth curves and taking these maximums as the maximum values of the cross-correlation functions. The step of correlating the signal segments and the step of extracting the maximum values of the cross-correlation functions may be performed remotely from the at least two receivers. As disclosed above, the step of sampling the signals may include a synchronizing of the signal samples with a GPS-derived timing reference. However, according to the above disclosure such an exact timing reference is no longer needed and the new method merely requires a rough synchronization only.

An aspect of the disclosure then refers to an equipment for measuring the travelling time differences of a signal having a bandwidth of 30 kHz or less that is transmitted from one stationary emitter over at least two channels having different delays to at least two stationary receivers. The equipment may comprise means for sampling the signals arriving at the at least two receivers samples according to the sampling theorem and interpolating the sampled values by a suitable number of interpolation values; means for correlating segments of the sampled interpolated signals of each two receivers to obtain the cross-correlation functions of each two signals; and means for extracting the maximum values of the cross-correlation functions that represent the travelling time differences of the corresponding signals. For improved accuracy the latter means preferably fits continuous smooth curves to the maximum values and two or more neighbouring values of the cross-correlation functions, the continuous smooth curves spanning the distances between these values, calculates the maximums of the continuous smooth curves and takes these maximums as the maximum values of the cross-correlation functions.

Such an equipment is particularly useful for measuring the travelling time differences of a signal having a bandwidth of 30 kHz or less that is transmitted from one emitter that may be a moving emitter over two or more channels having different delays. Thus, the channels may be disturbed by multipath transmissions and reflections from stationary or moving reflectors. Consequently, the equipment may further comprise means for sampling the signals arriving at the at least two receivers; means for correlating segments of the sampled signals of each two receivers to obtain the cross-correlation functions of each two signals; means for removing the effects of movements and disturbed channels from the cross-correlation functions; and means for extracting the maximum values of the cross-correlation functions that represent the travelling time differences of the corresponding signals. The means for sampling the signals arriving at the at least two receivers are preferably sampled according to the sampling theorem and interpolated. The means for correlating segments of the sampled signals of each two receivers divides the sampled and interpolated segments of signals of each two receivers into the same number of smaller pieces of equal size, correlates corresponding small pieces to obtain cross-correlation functions of each two corresponding signal pieces, orders the cross-correlation functions of the corresponding pieces in a sequence one behind the other in a two-dimensional plane, and computes a one-dimensional FFT in the ordering direction of the cross-correlation functions for every value of the cross-correlation functions in the two-dimensional plane. The means for removing the effects of movements and disturbed channels from the cross-correlation functions may select the peak line with the strongest magnitude from the FFTs in the two-dimensional plane and uses this peak line as a cross-correlation function for further processing. The means for extracting the maximum values of the cross-correlation functions may preferably fit continuous smooth curves to the maximum values and two or more neighbouring values of the cross-correlation functions, the continuous smooth curves spanning the distances between these values. The means may then calculate the maximums of the continuous smooth curves and take these maximums as the maximum values of the cross-correlation functions. The means for correlating the signal segments and the means for extracting the maximum values of the cross-correlation functions from the at least two receivers may be located remotely from the two receivers.

When for example the travelling time differences of a signal with a bandwidth of 20 kHz arriving at the sensors are to be measured the analog signals received may be sampled at a sampling frequency of 25 kHz (a sampling period of 40 $\mu$s). The sampled signals of each two sensors are then cross-correlated to find the maximum values of the cross-correlation functions. Thus, the cross-correlation function has values every 40 $\mu$s, and the cross-correlation function has its maximum value for a time difference of the two correlated signals of 40 $\mu$s. Converting the discrete values of the cross-correlation function to corresponding distances in space leads to values of ... - 12 km, 0 km, 12 km, 24 km ... and so on. In other words: the resolution would be in the range of 12 km and in most cases without any practical use.

Thus, the sampled sensor signals are interpolated by suitable values in a first step. This can be achieved by methods for interpolating band-limited signals, for example by Farrow-filters. Correlating two signals with improved resolutions provides a cross-correlation function having an improved resolution. With an interpolation factor of 10 for the sampled signals the cross-correlation function of the interpolated signals has values every 4 $\mu$s, and a maximum value of the cross-correlation function can now be found at a time delay of 24 $\mu$s. If the inaccuracy of the maximum value of the cross-correlation function in this case is estimated with about $\pm 2$ $\mu$s, this is equal to a travelling distance of the RF-wave of $\pm 600$ m. Thus, the improvement in the resolution of the time delay is of the order of the interpolation factor.

However, the accuracy cannot be further improved without limits by increasing the interpolation factors because the interpolated values are not the precise samples of an analog signal and because the interpolated values themselves have some uncertainty resulting from the interpolation procedure. Experience has shown that the algorithm for processing narrowband signals performs best with interpolation factors of about 10. As the reason for the limited resolution of the cross-correlation function is the discrete nature of the correlated signals, a continuous smooth curve, for example a second or higher order parabolic curve or a compensation spline, that spans the distances between the discrete values, may be fitted to the cross-correlation function in the neighbourhood of the maximum value. In general the maximum of the continuous smooth curve fitted to the cross-correlation function does not lie on one of the discrete values of the cross-correlation function but can be found anywhere between two values. Calculating then the maximum of the continuous smooth curve for the given example gives a final value for the time difference of 22.16 $\mu$s. Testing the method of the invention for emitters with known positions has shown that the time differences obtained in this way greatly improves the accuracy of the result, in some cases up to a range of some ten meters.

The receivers may each comprise a broadband radio frequency receiver with an antenna suitable for TDOA detection, amplifiers, down converters and filters to ensure that the signal from the target is received and amplified with sufficient fidelity as known by those skilled in the art. Such components of the radio frequency receiver should be designed to operate at the centre-frequency of interest, and with a suitable bandwidth, and together form a radio receiver signal chain. In some implementations, the centre frequency of interest may be tuneable, to allow the receivers to scan across a range of frequencies.

The receivers may additionally comprise means for sampling the signal which is output from the radio receiver signal chain as is well known to those skilled in the art, such as using an analogue to digital converted (ADC) and associated circuitry. The ADC must be capable of sampling the signal at least the sampling rate demanded by the method as described previously.

The receivers may additionally comprise circuitry to allow the method described above to be performed. It will be appreciated by the reader that the steps such as but not limited to correlation, movement effect removal, and maximum value extraction mentioned in the method can be performed digitally by a wide range of processing circuitry, and/or by a computer.

In one exemplary apparatus, there may be provided a processing system which comprises at least memory elements, a processor, and a communications bus allowing the other elements to communicate. The communications bus may be connected to the ADC. The samples from the ADC may be stored in the memory. The processor may be configured by suitable machine-readable code to be caused to access the samples stored in the memory, and to perform the mathematical operations of correlating segments of the sampled signals, and extract the maximum values of the cross-correlation functions that represent the travelling time differences of the corresponding signals.

In another exemplary apparatus, there may be provided alternative processing circuitry according to the method, such as but not limited to a Field Programmable Gate Array (FPGA), a Digital Signal Processor (DSP), or a microprocessor.

it will be appreciated by the reader that the method described above demands combination of individual travelling time differences from the different receivers to enable the suitable cross-correlations to be made. The receivers may therefore comprise data link apparatus according to methods well known to those skilled in the art, allowing each receiver to communicate data (including travelling time data) to each other receiver. The communication between receivers may be performed by a separate radio data link, for example. Alternatively, the communication of travelling time data between receivers may be performed by a wired communication system. Alternatively, each receiver could transmit the information required to a central server for processing according to the method.

It will be appreciated by the reader that the equipment may also comprise network receivers adapted to perform the functions of the method. The individual receivers in the network may communicate using radio or wired communication means, for example.

It will be appreciated by the reader that the processing steps which realize the improved TDOA processing algorithm presented above need not be performed at the two receivers for an accurate TDOA estimate to be found. Following the step of sampling the radio signals received respectively at each receiver, the sampled signals may be digitized, stored, optionally compressed, and then transmitted to a central processing station using techniques well known to the person skilled in the art, via internet. In this case, the step of correlating the signal segments and the step of extracting the maximum values of the cross-correlation functions is performed remotely from the at least two receivers. This technique may advantageously allow power to be saved at the receivers, thus preserving receiver battery consumption and reducing the complexity of operating the receivers.

**Claims**

1. A method for obtaining the unknown three-dimensional location of at least one radio frequency, target emitter by time difference of arrival measurements, the method comprising the steps of:

    choosing at least one reference emitter with an exactly known location and known occupied frequencies;

measuring with a plurality of sensor devices distributed around a target area the location of the at least one reference emitter with common TDOA techniques without precisely synchronizing the sensor devices;

comparing the measured location of the at least one reference emitter with the already known exact location of the at least one reference emitter to obtain a comparison result;

from the comparison result obtaining the location offsets in the measurement values caused by not precisely synchronizing the sensor devices;

without any intermittent shutting down or switching off of the sensor devices, measuring the location of the at least one unknown target emitter by applying TDOA techniques ; and

correcting the location offsets in the measurement results of the at least one unknown target emitter caused by not precisely synchronizing the sensor devices using the known location offsets calculated for the at least one reference emitter, wherein the signal of the at least one target emitter received at each sensor device is sampled with a sampling frequency that is suitable according to the sampling theorem and the autocorrelation function of the received signal is computed from the sampled signal, the autocorrelation function therefore being a discrete autocorrelation function, and

wherein the locating precision of the method is improved by the steps of:

interpolating the values in each time segment of the autocorrelation function with a number of interpolation values suitable for subsequent smooth curve fitting;

fitting a continuous smooth curve to the neighbourhood of the maximum value of the interpolated autocorrelation function in each time segment, the continuous smooth curve spanning the distances between the discrete values of the interpolated autocorrelation function; and

calculating the maximum of the continuous smooth curve and taking this maximum as the maximum value of the autocorrelation function in this time segment, which is taken as the location offset.

2. The method claimed in claim 1, wherein the interpolation of the discrete values of the autocorrelation function is done using a Farrow filter.

3. The method claimed in claim 1 or 2, wherein the continuous smooth curve is a parabolic curve.

4. The method claimed in any of claims 1 to 3, wherein a line of sight connection between the sensor devices and the at least one reference emitter and between the sensor devices and the at least one unknown target emitter is established by mounting the sensor devices on flying platforms.

5. An equipment for obtaining the unknown three-dimensional location of at least one radio frequency, target emitter by time difference of arrival measurements, the equipment comprising:

choosing means configured to choose at least one reference emitter with an exactly known location and known occupied frequencies;

sensor devices that measure the location of the at least one reference emitter and the location of the at least one unknown target emitter with common TDOA techniques without being precisely synchronized by an exact timing reference;

comparing means that are configured to compare the measured location of the at least one reference emitter with the already known exact location of the at least one reference emitter;

location offset computing means that are configured to calculate the location offsets in the measurement results for the at least one reference emitter caused by not precisely synchronizing the sensor devices; and

correcting means that are configured to correct the location offsets in the measurement results of the at least one unknown target emitter caused by not precisely synchronizing the sensor devices using the known location offsets calculated for the at least one reference emitter,

wherein the location offset computing means is configured to sample the signal of the at least one target emitter received at each sensor device with a sampling frequency that is suitable according to the sampling theorem and the autocorrelation function of the received signal is computed from the sampled signal, the autocorrelation function therefore being a discrete autocorrelation function, and

wherein the locating precision is improved by the location offset computing means being configured to perform the steps of:

interpolating the values in each time segment of the autocorrelation function with a number of interpolation values suitable for subsequent smooth curve fitting;

fitting a continuous smooth curve to the neighbourhood of the maximum value of the interpolated autocorrelation function in each time segment, the continuous smooth curve spanning the distances between the discrete values of the interpolated autocorrelation function; and
calculating the maximum of the continuous smooth curve and taking this maximum as the maximum value of the autocorrelation function in this time segment, which is taken as the location offset.

6. The equipment claimed in claim 5, wherein the sensor devices are mounted on a flying plafform.


**Patentansprüche**

1. Verfahren zum Ermitteln des unbekannten dreidimensionalen Standorts mindestens eines Hochfrequenz aussendenden Zielemitters durch Messungen der Differenz der Ankunftszeit, umfassend die Schritte:

das Wählen mindestens eines Referenzemitters mit exakt bekanntem Standort und bekannten belegten Frequenzen;
mit einer Anzahl Sensorvorrichtungen, die um ein Zielgebiet herum verteilt sind, das Messen des Standorts des mindestens einen Referenzemitters mit üblichen TDOA-Vorgehensweisen ohne dass die Sensorvorrichtungen präzise synchronisiert sind;
das Vergleichen des gemessenen Standorts des mindestens einen Referenzemitters mit dem bereits bekannten exakten Standort des mindestens einen Referenzemitters, damit man ein Vergleichsergebnis erhält;
aus dem Vergleichsergebnis das Bestimmen von Standortversätzen in den Messwerten, die durch die fehlende präzise Synchronisierung der Sensorvorrichtungen verursacht werden;
ohne irgendein zwischenzeitliches Herunterfahren oder Ausschalten der Sensorvorrichtungen seit sie den Ort des mindestens einen Referenzemitters gemessen haben, das Messen des Standorts des mindestens einen unbekannten Zielemitters durch Anwenden von TDOA-Vorgehensweisen; und
das Korrigieren der Standortversätze des mindestens einen unbekannten Zielemitters, die durch die fehlende präzise Synchronisierung der Sensorvorrichtungen verursacht werden, mit Hilfe der bekannten Standortversätze, die für den mindestens einen Referenzemitter berechnet wurden, wobei das Signal des mindestens einen Zielemitters, das an jeder Sensorvorrichtung empfangen wird, mit einer Abtastfrequenz abgetastet wird, die dem Abtasttheorem genügt, und die Autokorrelationsfunktion des empfangen Signals aus dem abgetasteten Signal berechnet wird, und die Autokorrelationsfunktion daher eine diskrete Autokorrelationsfunktion ist, wobei die Ortungsgenauigkeit des Verfahrens durch die folgenden Schritte verbessert wird:

das Interpolieren der Werte in jedem Segment der Autokorrelationsfunktion mit einer Anzahl Interpolationswerte, die für das nachfolgende Anpassen einer glatten Kurve geeignet sind;
das Anpassen einer kontinuierlichen glatten Kurve in der Umgebung des Maximalwerts der interpolierten Autokorrelationsfunktion in jedem Zeitsegment, wobei die kontinuierliche glatte Kurve die Abstände zwischen den diskreten Werten der interpolierten Autokorrelationsfunktion überbrückt; und
das Berechnen des Maximalwerts der kontinuierlichen glatten Kurve, wobei dieses Maximum als Maximalwert der Autokorrelationsfunktion in diesem Zeitsegment genommen wird und als Standortversatz angesehen wird.

2. Verfahren nach Anspruch 1, wobei das Interpolieren der diskreten Werte der Autokorrelationsfunktion mit Hilfe eines Farrow-Filters vorgenommen wird.

3. Verfahren nach Anspruch 1 oder 2, wobei die kontinuierliche glatte Kurve eine parabolische Kurve ist.

4. Verfahren nach irgendeinem der Ansprüche 1 bis 3, wobei eine direkte Sichtverbindung zwischen den Sensorvorrichtungen und dem mindestens einen Referenzemitter und zwischen den Sensorvorrichtungen und dem mindestens einen Zielemitter dadurch hergestellt wird, dass die Sensorvorrichtungen auf fliegenden Plattformen montiert werden.

5. Gerätschaft zum Bestimmen des unbekannten dreidimensionalen Standorts mindestens eines Hochfrequenz aussendenden Zielemitters durch Messungen der Differenz der Ankunftszeit, umfassend:

eine Auswahlvorrichtung, die dafür ausgelegt ist, mindestens einen Referenzemitter mit exakt bekanntem Standort und bekannten belegten Frequenzen zu wählen;
Sensorvorrichtungen, die den Standort des mindestens einen Referenzemitters und den Standort des mindestens einen unbekannten Zielemitters mit üblichen TDOA-Vorgehensweisen messen, ohne dass die Sensorvorrichtungen über eine exakte Zeitreferenz präzise synchronisiert sind;

Vergleichsvorrichtungen, die dafür ausgelegt sind, den gemessenen Standort des mindestens einen Referenzemitters mit dem bereits bekannten exakten Standort des mindestens einen Referenzemitters zu vergleichen;

Standortversatz-Berechnungsvorrichtungen, die dafür ausgelegt sind, die Standortversätze in den Messergebnissen für den mindestens einen Referenzemitter zu berechnen, die dadurch verursacht werden, dass die Sensorvorrichtungen nicht präzise synchronisiert sind; und

Korrekturvorrichtungen, die dafür ausgelegt sind, die Standortversätze in den Messergebnissen für den mindestens einen unbekannten Zielemitter zu korrigieren, die dadurch verursacht werden, dass die Sensorvorrichtungen nicht präzise synchronisiert sind, und zwar unter Verwendung der bekannten Standortversätze, die für den mindestens einen Referenzemitter berechnet wurden,

wobei die Standortversatz-Berechnungsvorrichtung dafür ausgelegt ist, das Signal des mindestens einen Zielemitters, das an jeder Sensorvorrichtung empfangen wird, mit einer Abtastfrequenz abzutasten, die dem Abtasttheorem genügt, und die Autokorrelationsfunktion des empfangen Signals aus dem abgetasteten Signal berechnet wird, und die Autokorrelationsfunktion daher eine diskrete Autokorrelationsfunktion ist,

wobei die Ortungsgenauigkeit dadurch verbessert wird, dass die Standortversatz-Berechnungsvorrichtung dafür ausgelegt ist, die folgenden Schritte auszuführen:

das Interpolieren der Werte in jedem Zeitsegment der Autokorrelationsfunktion mit einer Anzahl Interpolationswerte, die für das nachfolgende Anpassen einer glatten Kurve geeignet sind;

das Anpassen einer kontinuierlichen glatten Kurve in der Umgebung des Maximalwerts der interpolierten Autokorrelationsfunktion in jedem Zeitsegment, wobei die kontinuierliche glatte Kurve die Abstände zwischen den diskreten Werten der interpolierten Autokorrelationsfunktion überbrückt; und

das Berechnen des Maximalwerts der kontinuierlichen glatten Kurve, wobei dieses Maximum als Maximalwert der Autokorrelationsfunktion in diesem Zeitsegment genommen wird und als Standortversatz angesehen wird.

6. Gerätschaft nach Anspruch 5, wobei die Sensorvorrichtungen auf einer fliegenden Plattform montiert sind.

## Revendications

1. Procédé d'obtention de la localisation tridimensionnelle inconnue d'au moins un émetteur de radiofréquences cible par des mesures de différence de moment d'arrivée, le procédé comprenant les étapes consistant à :

choisir au moins un émetteur de référence avec une localisation connue exactement et des fréquences occupées connues ;

mesurer, avec une pluralité de dispositifs détecteurs répartis autour d'une zone cible, la localisation dudit au moins un émetteur de référence avec des techniques habituelles de différence de moment d'arrivée sans synchroniser précisément les dispositifs détecteurs ;

comparer la localisation mesurée dudit au moins un émetteur de référence à la localisation exacte déjà connue dudit au moins un émetteur de référence pour obtenir un résultat de comparaison ;

à partir du résultat de comparaison, obtenir les décalages de localisation dans les valeurs de mesure, causés par la synchronisation non précise des dispositifs détecteurs ;

sans aucun arrêt ou désactivation intermittent des dispositifs détecteurs, mesurer la localisation dudit au moins un émetteur cible inconnu en appliquant des techniques de différence de moment d'arrivée ; et

corriger les décalages de localisation dans les résultats de mesure dudit au moins un émetteur cible inconnu, causés par une synchronisation non précise des dispositifs détecteurs en utilisant les décalages de localisation connus calculés pour ledit au moins un émetteur de référence, dans lequel le signal dudit au moins un émetteur cible reçu à chaque dispositif détecteur est échantillonné avec une fréquence d'échantillonnage qui est appropriée selon le théorème d'échantillonnage et la fonction d'autocorrélation du signal reçu est calculée à partir du signal échantillonné, la fonction d'autocorrélation étant pour cette raison une fonction d'autocorrélation discrète, et

dans lequel la précision de localisation du procédé est améliorée par les étapes consistant à :

interpoler les valeurs dans chaque segment de temps de la fonction d'autocorrélation avec un certain nombre de valeurs d'interpolation appropriées pour l'ajustement de courbe lisse ultérieur ;

ajuster une courbe lisse continue au voisinage de la valeur maximale de la fonction d'autocorrélation interpolée dans chaque segment de temps, la courbe lisse continue couvrant les distances entre les valeurs discrètes de la fonction d'autocorrélation interpolée ; et

calculer le maximum de la courbe lisse continue et prendre ce maximum comme valeur maximale de la fonction d'autocorrélation dans ce segment de temps, qui est prise en tant que décalage de localisation.

2. Procédé selon la revendication 1, dans lequel l'interpolation des valeurs discrètes de la fonction d'autocorrélation est faite en utilisant un filtre de Farrow.

3. Procédé selon la revendication 1 ou 2, dans lequel la courbe lisse continue est une courbe parabolique.

4. Procédé selon l'une quelconque des revendications 1 à 3, dans lequel une liaison de ligne de visée entre les dispositifs détecteurs et ledit au moins un émetteur de référence et entre les dispositifs détecteurs et ledit au moins un émetteur cible inconnu est établie en montant les dispositifs détecteurs sur une plate-forme volante.

5. Équipement permettant d'obtenir la localisation tridimensionnelle inconnue d'au moins un émetteur de radiofréquences cible par des mesures de différence de moment d'arrivée, l'équipement comprenant :

un moyen de choix configuré pour choisir au moins un émetteur de référence avec une localisation connue exactement et des fréquences occupées connues ;

des dispositifs détecteurs qui mesurent la localisation dudit au moins un émetteur de référence et la localisation dudit au moins un émetteur cible inconnu avec des techniques habituelles de différence de moment d'arrivée sans être précisément synchronisées par une référence temporelle exacte ;

des moyens de comparaison qui sont configurés pour comparer la localisation mesurée dudit au moins un émetteur de référence avec la localisation exacte déjà connue dudit au moins un émetteur de référence ;

des moyens de calcul de décalage de localisation qui sont configurés pour calculer les décalages de localisation dans les résultats de mesure pour ledit au moins un émetteur de référence, causés par une synchronisation non précise des dispositifs détecteurs ; et

des moyens de correction qui sont configurés pour corriger les décalages de localisation dans les résultats de mesure dudit au moins un émetteur cible inconnu, causés par une synchronisation non précise des dispositifs détecteurs en utilisant les décalages de localisation connus calculés pour ledit au moins un émetteur de référence,

dans lequel le moyen de calcul de décalage de localisation est configuré pour échantillonner le signal dudit au moins un émetteur cible reçu à chaque dispositif détecteur avec une fréquence d'échantillonnage qui est appropriée selon le théorème d'échantillonnage et la fonction d'autocorrélation du signal reçu est calculée à partir du signal échantillonné, la fonction d'autocorrélation étant pour cette raison une fonction d'autocorrélation discrète, et

dans lequel la précision de localisation est améliorée par le moyen de calcul de décalage de localisation qui est configuré pour effectuer les étapes consistant à :

interpoler les valeurs dans chaque segment de temps de la fonction d'autocorrélation avec un certain nombre de valeurs d'interpolation appropriées pour l'ajustement de courbe lisse ultérieur ;

ajuster une courbe lisse continue au voisinage de la valeur maximale de la fonction d'autocorrélation interpolée dans chaque segment de temps, la courbe lisse continue couvrant les distances entre les valeurs discrètes de la fonction d'autocorrélation interpolée ; et

calculer le maximum de la courbe lisse continue et prendre ce maximum comme valeur maximale de la fonction d'autocorrélation dans ce segment de temps, qui est prise en tant que décalage de localisation.

6. Équipement selon la revendication 5, dans lequel les dispositifs détecteurs sont montés sur une plate-forme volante.

## Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5512908 A, Herrick
- US 5327144 A, Stilp
- US 20080167051 A, Cheok
- US 20080089393 A, Opperman
- US 20070236389 A1
- US 2008089393 A1